(19) **Europäisches Patentamt / European Patent Office / Office européen des brevets**

(11) **EP 2 609 512 B1**

(12) **EUROPEAN PATENT SPECIFICATION**

(45) Date of publication and mention
of the grant of the patent:
**07.10.2015 Bulletin 2015/41**

(51) Int Cl.:
***G06F 17/30*** (2006.01)

(21) Application number: **10856515.1**

(22) Date of filing: **25.08.2010**

(86) International application number:
**PCT/US2010/046673**

(87) International publication number:
**WO 2012/026933 (01.03.2012 Gazette 2012/09)**

(54) **TRANSFERRING FILES**

ÜBERTRAGUNG VON DATEIEN

TRANSFERT DE FICHIERS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**03.07.2013 Bulletin 2013/27**

(73) Proprietor: **Hewlett-Packard Development
Company, L.P.
Houston, TX 77070 (US)**

(72) Inventor: **BHASIN, Gautam
Karnataka 560048 (IN)**

(74) Representative: **Hoyle, Benjamin James et al
EIP
Fairfax House
15 Fulwood Place
London WC1V 6HU (GB)**

(56) References cited:
**WO-A1-2004/092969      US-A1- 2002 078 224
US-A1- 2004 213 054      US-A1- 2006 101 042
US-A1- 2007 162 462      US-A1- 2009 022 156
US-A1- 2009 199 199      US-A1- 2010 082 836**

**Description**

BACKGROUND

File systems and mount points store data and information for numerous applications and uses. As computing technology advances, file systems and mount points store ever increasing amounts of data. For example, cloud computing for mobile and/or stationary computing devices may require terabytes of data to be stored at locations available to users worldwide. In other examples, social media applications such as, for example, YouTube and Facebook may store terabytes of data related to photos, movies, video clips, applications, and user information. Transferring, migrating, and/or backing-up this relatively large amount of data may take a significant amount of time. To backup a file system storing, for example, a terabyte of data may take more than ten hours if there are many small files.

BRIEF DESCRIPTION OF THE DRAWINGS

FIG. 1 is a schematic illustration of an example system constructed pursuant to the teachings of this disclosure to transfer files between a first file system and a second file system.
FIG. 2 shows an example hierarchical structure of the nodes within the first file system 102 of FIG. 1.
FIG. 3 shows the example nodes of FIG. 2 assigned to sub-traversal paths to transmit files to the second file system of FIG. 1.
FIG. 4 shows an example graph of transfer times of a file system for different numbers of sub-traversal paths.
FIG. 5 is a flowchart representative of example machine-accessible instructions, which may be executed to implement the transfer processor and/or the system of FIG. 1.
FIG. 6 is a schematic illustration of an example processor platform that may be used and/or programmed to execute the example processes and/or the example machine-accessible instructions of FIG. 5 to implement any or all of the example methods, apparatus and/or articles of manufacture described herein.

DETAILED DESCRIPTION

Currently, relatively large file systems, mount points, and/or file directories are widely used in various applications including, cloud computing, social media, mobile computing, data backup, anti-virus programs, web crawlers, etc. As these applications become more prominent, the quantities of data associated with these applications may increase rapidly, thereby requiring larger storage servers, disks, disk arrays, etc. Personal storage disks may store gigabytes of data, while many central storage systems may store terabytes to petabytes of data. For example, some telecommunications companies may transfer 20 petabytes of data a day and some Internet search providers may process 30 petabytes of data per day. In the near future, it may be possible to store exabytes of data within a file system and/or a mount point.

When examining a data structure, a node represents a grouping of data in the data structure. For example, a node may represent a directory or folder that stores files. Alternatively, a node may represent any number of files, directories, and/or any other type of elements of data structures. Nodes may be interlinked so that one node may be accessible via another node. In a hierarchical data structure, for example, one or more lower level nodes are linked to a higher level node. In this hierarchical structure, a user searches for nodes from the top down by searching lower level nodes linked to the higher level node until a desired node and/or data contained in a node is located. For consistency, this disclosure will not use the term "folder" or "directory" but instead uses the term "node" to refer to one or more folders and/or one or more directories. A node may contain one or more files. Thus, a node may be a single file, a folder containing one or more files, and/or a directory containing one or more files.

There are various reasons to transfer data among data storage devices. For example, data may be transferred for data migration between different servers, for data backup, for resource utilization efficiency (e.g., optimization), etc. In some examples, data may be transferred between different physical (e.g., geographic) locations. In other examples, data may be transferred to different locations within the same server and/or storage disk. To transfer data, a known transfer application at a source file system transmits data to a transfer application at a destination file system using a sequential traversal path. However, sequential transfer is relatively slow because the data is read at the source, transmitted, and written at the destination in the original order of the data within the source file system (e.g., in the order of files stored in a directory tree). Additionally, sequential traversal may be inefficient by not utilizing the full capabilities of disk arrays, tape drives, and traversal paths.

In some known systems, a file system traversal path is partitioned into sub-traversal paths to transfer the data along parallel paths. In these known systems, data transfer systems utilize sub-traversal paths by transferring data via parallel streams to thereby improve performance. Parallel transfer systems assign nodes to sub-traversal paths based on a location and/or relationship of the nodes within a hierarchy of the file system. In these known systems, efficiency of the parallel transfer systems is contingent upon a distribution of data size and/or a number of data elements (e.g. files) in nodes to be transferred. Generally, a balanced (e.g., homogenous) file system may be transported more efficiently than an unbalanced system because each of the sub-traversal paths of a balanced system include approximately the same number of data elements and data element sizes within each of the nodes.

In known unbalanced file systems (e.g., file systems with uneven distribution of data sizes and/or a number of data elements among nodes), different sub-traversal paths have a different number of data elements and/or different data element sizes. As a result of this unbalance, some sub-traversal paths take longer to transfer the assigned nodes than other sub-traversal paths. Further, this unbalance may result in some sub-travels paths being under-utilized because some sub-traversal paths may finish transmitting assigned nodes while other sub-traversal paths still have nodes to transmit.

Some example methods, apparatus and articles of manufacture disclosed herein improve the efficiency of parallel data transfer systems by partitioning nodes among sub-traversal paths. This node partitioning is formed by balancing ratios of a number of data elements included within nodes assigned to sub-traversal paths to a total size of the data elements included within the nodes assigned to each of the sub-traversal paths. By balancing these ratios for each of the sub-traversal paths, a described example data transfer system transmits approximately the same number of data elements and/or the same data size across each sub-traversal path, thereby improving utilization of the entire traversal path and improving transfer time of unbalanced file systems. In some examples, the ratios for each sub-traversal path are determined by calculating ratios for each node within the file system. Additionally, in some disclosed hierarchical file systems, ratios for parent nodes (e.g., higher level nodes such as a root directory) are calculated based on ratios of child nodes (e.g., linked lower level nodes such as sub-directories).

Upon calculating the ratios, some of the example methods, apparatus and articles of manufacture disclosed herein identify a number of sub-traversal paths (e.g., seek an optimal number of sub-traversal paths for a given transfer) by reducing (e.g., minimizing) a standard deviation calculated for sums of the ratios for each of the sub-traversal paths. Some example implementations assign the nodes of the file system to the sub-traversal paths in a non-sequential order. For example, a parent node is assigned to a first sub-traversal path while linked child nodes are assigned to a second sub-traversal path. In some circumstances, a transfer application at a destination reconstructs the hierarchical relationship between nodes as they are received via the sub-traversal paths. In some examples, a threshold number of sub-traversal paths may be specified to restrict a routine from allocating nodes to sub-traversal paths that may not be efficiently supported by data transfer mechanisms.

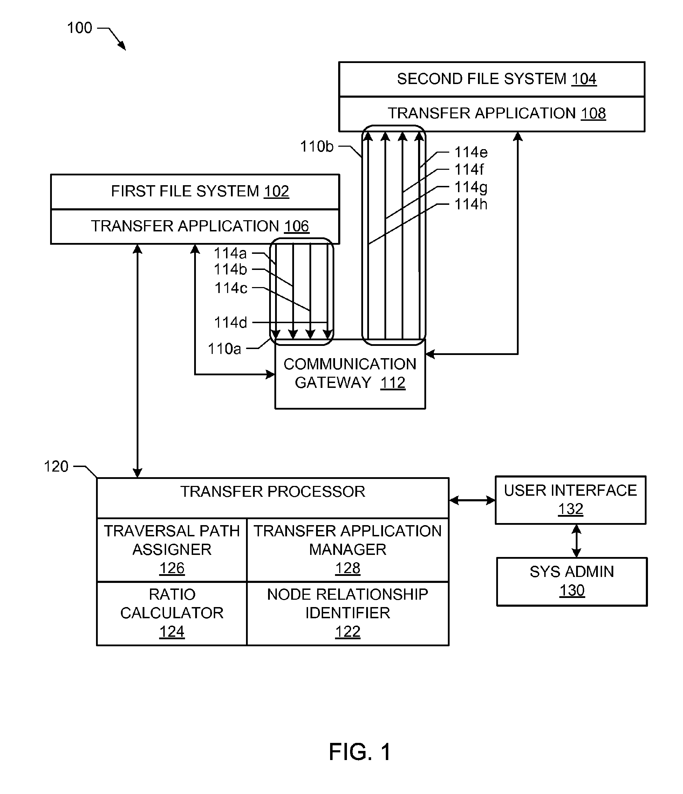

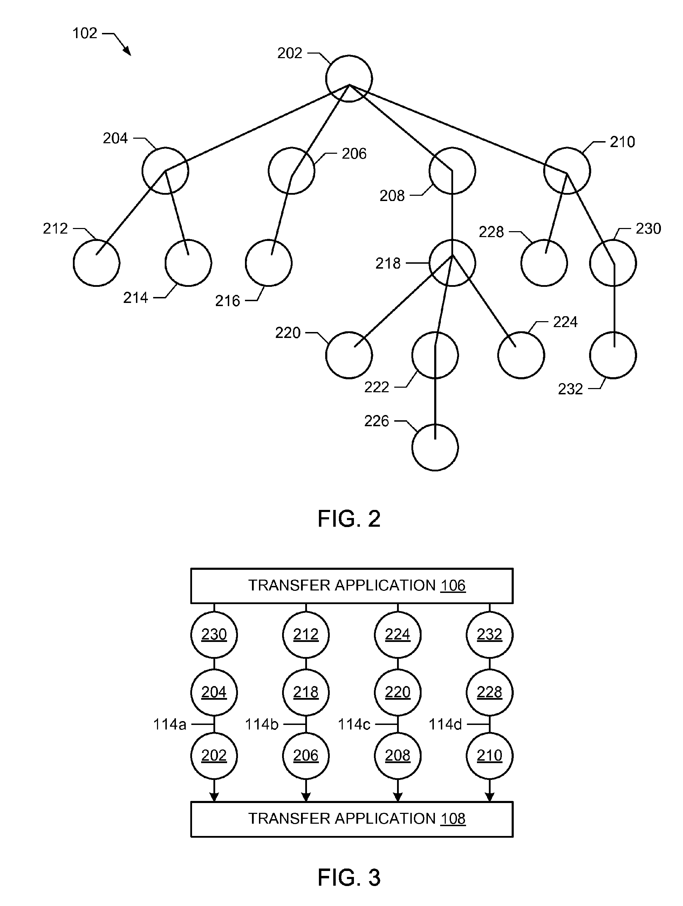

FIG. 1 shows an example system 100 constructed in accordance with the teachings of the invention to transfer data between a first file system 102 and a second file system 104. The file systems 102 and 104 may be implemented by, for example, storage disk(s) disk array(s), tape drive(s), volatile and/or non-volatile memory, compact disc(s) (CD), digital versatile disc(s) (DVD), floppy disk(s), read-only memory (ROM), random-access memory (RAM), programmable ROM (PROM), electronically-programmable ROM (EPROM), electronically-erasable PROM (EEPROM), optical storage disk(s), optical storage device(s), magnetic storage disk(s), magnetic storage device(s), cache(s), and/or any other storage media in which data is stored for any duration. The first file system 102 of the illustrated example includes data that is organized among nodes. For example, the data may include files, directories, folders, or any other data element. The example nodes are organized in a hierarchical structure so that different nodes are located at different hierarchical levels (e.g., directories at different levels in a directory tree). Some or all of the nodes may be linked together. An example node structure for the example file system 102 is shown in FIG. 2.

To manage the transfer of nodes, the first and second file systems 102 and 104 of the illustrated example include and/or are communicatively coupled to respective first and second transfer applications 106 and 108. The first and second transfer applications 106 and 108 may implement any number and/or type(s) of application programming interface(s), protocol(s) and/or message(s) to interface with the file systems 102 and 104 for reading, writing and/or transferring nodes. In addition to transferring nodes, the first and second transfer applications 106 and 108 of the illustrated example also transfer relationships and/or a hierarchy of the transferred nodes via instructions and/or messages. Further, the first and second transfer applications 106 and 108 of the illustrated example share networking information to establish traversal paths 110a-b of the nodes across a communication gateway 112.

The first file system 102 and the first transfer application 106 of the illustrated example are included in a first server while the second file system 104 and the second transfer application 108 of the illustrated example are included in a second server. The example first transfer application 106 and the example second transfer application 108 are, therefore, separate applications. In some implementations, the first file system 102 and the first transfer application 106 are included within a computer, a server, and/or a processor while the second file system 104 and the second transfer application 108 are included in a different computer, server, and/or processor. In other examples, the first file system 102 and the second file system 104 may be located within the same computer, server, and/or processor but at different memory locations. In some implementations, the first and second transfer applications 106 and 108 are the same application. Alternatively, the first transfer application 106 may be implemented for the first file system 102 while the second transfer application 108 is implemented at the second file system 104. Any other locations and combinations of the first file system102, the second file system 104, the first transfer application 106, and the second transfer application 108 may be used.

The example traversal path 110a-b includes a first traversal path 110a from the first file system 102 via the first transfer application 106 to the communication gateway 112 and a second traversal path 110b from the communication gateway 112 to the second file system 104. The example traversal path 110a-b traverses a network communication path. Alternatively, the traversal path 110a-b may traverse any wired and/or wireless network communication paths across a Local Area network (LAN) and/or a Wide Area Network (WAN) (e.g., the Internet). The example communication gateway 112 includes network components (e.g., routers, switches, gateways, etc.) to facilitate the transfer of data between the first and second file systems 102 and 104 via the traversal path 110a-b. Further, the first and second transfer applications 106 and 108 use the communication gateway 112 to send instructions to create the traversal path 110a-b.

In the example of FIG. 1, the first traversal path 110a of the illustrated example includes sub-traversal paths 114a-d. Sub-traversal paths 114a-d are path partitions of the first traversal path 110a. The example second traversal path 110b includes sub-traversal paths 114e-h. The sub-traversal paths 114a-d are communicatively coupled to the sub-traversal paths 114e-h via the communication gateway 112. For example, the sub-traversal path 114a is communicatively coupled to sub-traversal path 114h so that any nodes transmitted along the sub-traversal path 114a are received at the second file system 104 via the sub-traversal path 114h. In other examples, the traversal path 110a-b may include any number of sub-traversal paths and any communicative interconnection.

To determine the nodes to be assigned to the sub-traversal paths 114a-d, the system 100 of the illustrated example includes a transfer processor 120. The example transfer processor 120 is implemented within and/or communicatively coupled to the same computer, server, processor, etc. as the first transfer application 106 and/or the first file system 102. Alternatively, the example transfer processor 120 may be located in a central location accessible to the first and/or the second file systems 102 and 104 (and/or other file systems not shown) via the communication gateway 112. In other examples, the transfer processor 120 may be included with the first and/or the second transfer applications 106 and 108. In yet other examples, the transfer processor 120 may use the first and/or second transfer applications 106 and 108 as an interface for transferring nodes.

The example transfer processor 120 receives instructions from the first transfer application 106 when a user specifies data in the first file system 102 to be transferred. In some examples, the first transfer application 106 provides the transfer processor 120 with a location of the first file system 102 within a disk array, server, tape drive, or other storage medium. In other examples, the first transfer application 106 may specify a root node, which is a highest level node of a file system to be transferred. In examples where only a portion of a file system is specified to be transferred, the first transfer application 106 provides the transfer processor 120 with a list of nodes to be transferred. Alternatively, an identification of the subset may be provided to the transfer processor 120, which may determine corresponding nodes. Additionally, the first transfer application 106 may provide the transfer processor 120 with a destination file system (e.g., the second file system 104).

To determine a node organization within the first file system 102, the example transfer processor 120 of the illustrated example includes a node relationship identifier 122. The example node relationship identifier 122 accesses the first file system 102 and determines relationships (e.g., links) among nodes. For example, in a hierarchical file system, the node relationship identifier 122 determines a root node, determines nodes one level down (e.g., sub-nodes) linked to the root node, determines nodes two levels down linked to the nodes one level down, and continues until the lowest level node is identified. The node relationship identifier 122 may store the relationships among the nodes. Additionally, the node relationship identifier 122 transmits the relationship information to the second transfer application 108, thereby enabling the second transfer application 108 to reconstruct the transferred file system (e.g., when it receives the nodes via the sub-traversal paths 114e-h in a non-sequential manner).

To calculate ratios for each of the nodes within the first file system 102, the example transfer processor 120 includes a ratio calculator 124. The example ratio calculator 124 calculates a ratio of a number of files ($N_f$) in a node to the total file size ($S_z$) of the files within that same node. Alternatively, a ratio of a number of any type of data elements to the total size of the data elements may be determined. The example ratio is a pack ratio ($P_r$) and is defined as shown in Equation 1.

$$Pr = \frac{N_f}{S_z} \qquad \text{Equation (1)}$$

Other ratio(s) or relationship(s) between the number of files and the file size may be determined and/or used in addition to or in place of the pack ratio ($P_r$).

The pack ratio provides a numeric representation of a number of files within a node in relation to a size of the files within that same node. Because data transfer time is affected by both the number of separate read functions performed by the transfer application 106 and the data transfer time of the total file size, the pack ratio provides the transfer processor 120 with an approximation of transfer time based on the contents of the node. For example, a node with many separate files may have a relatively long transfer time even though each of the separate files may be relatively small because a read function must be performed for each separate file within the node. In contrast, a node with only a few relatively large files may have a shorter transfer time because streaming a large file may require less time than performing individual read functions.

The example ratio calculator 124 of the illustrated example uses the node relationship data provided by the node relationship identifier 122 to identify nodes for calculating ratios. The ratio calculator 124 calculates the pack ratio of the root node and recursively calculates the pack ratios for the lower level nodes until the pack ratio for the lowest level node is calculated. In other examples, the ratio calculator 124 may only calculate ratios for a certain number of levels down from the root node. In these examples, files within nodes at lower levels may be included within the pack ratio for nodes at the lowest level calculated by the ratio calculator 124.

In addition to calculating pack ratios for each of the nodes, the ratio calculator 124 of the illustrated example calculates summed ratios of nodes in hierarchical file systems. For example, if second level nodes are linked to third level nodes, the ratio calculator 124 calculates summed ratios for the second level nodes by adding the pack ratio for each second level node to the pack ratios of third level nodes linked to the second level nodes. The example ratio calculator 124 calculates a summed ratio for the first level node based on the pack ratio of the first level node and the summed ratio of the second level nodes. The summed ratios are used to determine if lower level nodes should be included within linked higher level nodes during a file transfer, should be transferred separately, or should be included with other nodes. In other words, the summed ratios are used to determine which nodes should be bundled and transferred together as a group along the same sub-traversal path.

To determine which nodes are assigned to which sub-traversal paths, the example transfer processor 120 of FIG. 1 includes a traversal path assigner 126. The example traversal path assigner 126 uses ratios calculated by the ratio calculator 124 to assign nodes of the first file system 102 to the sub-traversal paths 114a-h. The traversal path assigner 126 assigns nodes to sub-traversal paths in a manner that reduces (e.g., minimizes) a standard deviation of the sums of the ratios of the nodes assigned to each of the sub-traversal paths 114a-h. In the illustrated example, one sum is determined for each of the sub-traversal paths 114a-h and one standard deviation is computed across all of the sub-traversal paths 114a-h. For example, the traversal path assigner 126 may determine a first sum of pack ratios of nodes assigned to a first sub-traversal path, a second sum of pack ratios of nodes assigned to a second sub-traversal path, and a third sum of pack ratios of nodes assigned to a third sub-traversal path. The travel path assigner 126 may then determine a standard deviation of the first sum, the second sum, and the third sum. The traversal path assigner 126 of the illustrated example reduces the standard deviation of the sum of the nodes of each sub-traversal path 114a-d by determining a number (e.g., an optimal number) of the sub-traversal paths 114a-d and determining which nodes should be assigned to those sub-traversal paths 114a-d. The optimization routine used by the traversal path assigner 126 includes any heuristic or statistical algorithm including, for example, a greedy algorithm, matrix chain multiplication, a graduated optimization, a Gauss-Newton algorithm, an artificial neural network algorithm, etc.

In an example implementation, the traversal path assigner 126 assigns nodes with the largest ratios among a set of sub-traversal paths 114a-d. For example, the largest node $N_1$ is assigned to path 114a, the second largest node $N_2$ is assigned to path 114b, the third largest node $N_3$ is assigned to path 114c, and the fourth largest node $N_4$ is assigned to path 114d. The traversal path assigner 126 then assigns the nodes with the next largest ratios to the same sub-traversal paths 114a-d in reverse order. For example, the fifth largest node $N_5$ is assigned to path 114d, the sixth largest node $N_6$ is assigned to path 114c, the seventh largest node $N_7$ is assigned to path 114b, and the eighth largest node $N_8$ is assigned to path 114a. The traversal path assigner 126 of the illustrated example continues this process of node assigning until all of the nodes are assigned to the paths 114a-d. The traversal path assigner 126 then compares a standard deviation of the totals of the ratios of the nodes as assigned to the sub-traversal paths to a threshold and re-assigns the nodes using additional sub-traversal paths (not shown) and/or rearranges the nodes among the initial sub-traversal paths 114a-d to reduce (e.g., minimize) the standard deviation below the threshold. In other examples, rather than following the largest to smallest node assignment pattern described above, the traversal path assigner 126 may randomly or sequentially assign nodes to the initial set of sub-traversal paths 114a-d, then adjust the nodes or add additional sub-traversal paths to reduce (e.g., minimize) the standard deviation.

In some examples, the traversal path assigner 126 attempts to assign nodes to the sub-traversal paths 114a-d whenever the ratio calculator 124 completes the calculation of pack ratios for nodes at a level. For example, upon the ratio calculator 124 determining pack ratios for the second level nodes in a hierarchical file structure, the traversal path assigner 126 is intended to assign the first and second level nodes to the sub-traversal paths 114a-d and determine if the standard deviation of the summed ratios of the nodes are below a threshold. During this assignment attempt, lower level nodes are included within the corresponding second level nodes. If the standard deviation is below the threshold, the traversal path assigner 126 instructs the ratio calculator 124 to stop calculating ratios for lower level nodes and instructs the first transfer application 106 to initiate a data transfer. This is efficient because the sub-traversal paths 114a-d are balanced within the threshold. However, if the standard deviation is not below the threshold, the traversal path assigner 126 waits until the pack ratios of the next lowest level nodes are calculated and re-assigns the nodes to sub-traversal paths 114a-d. The traversal path assigner 126 checks the standard deviation and continues the process of moving to lower levels until the standard deviation for the sub-traversal paths is within the threshold.

The threshold of the illustrated example is specified by a designer and/or administrator of the transfer processor 120. In other examples, the threshold may be specified by a user requesting the file transfer. Additionally, the number of levels of nodes for assigning to the sub-traversal paths 114a-d is specified by the designer, administrator and/or user. In the illustrated example, the number of levels is limited to reduce the number of possible sub-traversal paths 114a-d. Further, the number of available sub-traversal paths 114a-d is limited by the designer, administrator and/or user based on, for example, physical limitations of the traversal paths 110a-b and/or connector limitations within the disk and/or tape drives of the first file system 102 and/or the second file system 104.

To manage the transfer of the nodes by the first transfer application 106, the transfer processor 120 of the illustrated example includes a transfer application manager 128. The example transfer application manager 128 transmits the nodes from the first file system 102 to the second file system 104 by instructing the first transfer application 106 as to which nodes are to be transferred via which sub-traversal paths 114a-d. Additionally, the transfer application manager 128 may instruct the transfer application 106 as to the number of sub-traversal paths 114a-d to partition from the traversal paths 110a-b. For example, the number of sub-traversal paths may be present or may be determined based on the size and/or number of elements of the file system to be transferred.

The example transfer application manager 128 receives the assignment of the nodes to the sub-traversal paths 114a-d from the traversal path assigner 126 and transmits this information to the first transfer application 106. In this manner, the transfer application manager 128 functions as an interface between the transfer processor 120 and the transfer application 106. In some examples, the transfer application manager 128 may provide the node assignment to the second file system 104, which may use the information for reconstructing the node hierarchy as the nodes are received via the sub-traversal paths 114e-h.

Additionally, the transfer application manager 128 monitors the transfer application 106 to determine if a data transfer is deviating from expected performance. If the transfer application manager 128 detects that the load on the sub-traversal paths 114a-d has become unbalanced, the transfer application manager 128 instructs the traversal path assigner 126 to re-assign the remaining nodes to be transferred among the sub-traversal paths. The transfer application manager 128 then communicates the new node assignment(s) to the first transfer application 106. In this manner, the transfer application manager 128 is reactive to changing system and/or network conditions.

To provide a standard deviation threshold, a node level limit, and/or a sub-traversal path limit, the example system 100 includes a system administrator 130. The example system administrator 130 is directly communicatively coupled to the transfer processor 120 via a user interface 132. Alternatively, the user interface 132 may be communicatively coupled to the transfer processor 120 via the communication gateway 112. The example user interface 132 implements any number and/or type(s) of interfaces (e.g., a web-based graphical user interface).

The system administrator 130 of the illustrated example includes any system manager, monitor, operator, etc. that measures and/or provides operational instructions to the transfer processor 120. The system administrator 120 may also update the traversal path assigner 126 with optimization routines and/or may configure the transfer processor 120 to be communicatively coupled to different file systems. The system administrator 130 may also troubleshoot issues of the transfer processor 120.

While an example manner of implementing the example system 100 has been illustrated in FIG. 1, one or more of the elements, processes and/or devices illustrated in FIG. 1 may be combined, divided, re-arranged, omitted, eliminated and/or implemented in any other way. Further, the example file systems 102 and 104, the example first and second transfer applications 106 and 108, the example communication gateway 112, the example transfer processor 120, the example node relationship identifier 122, the example ratio calculator 124, the example traversal path assigner 126, the example transfer application manager 128, the example system administrator 130, the example user interface 132 and/or, more generally, the example system 100 of FIG. 1 may be implemented by hardware, software, firmware and/or any combination of hardware, software and/or firmware.

Thus, for example, any or all of the example first and second file systems 102 and 104, the example first and second transfer applications 106 and 108, the example communication gateway 112, the example transfer processor 120, the example node relationship identifier 122, the example ratio calculator 124, the example traversal path assigner 126, the example transfer application manager 128, the example system administrator 130, the example user interface 132 and/or, more generally, the example system 100 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended apparatus claims are read to cover a purely software and/or firmware implementation, at least one of the example first file systems 102, the example second file system 104, the example first transfer application 106, the example second transfer application 108, the example communication gateway 112, the example transfer processor 120, the example node relationship identifier 122, the example ratio calculator 124, the example traversal path assigner 126, the example transfer application manager 128, the example system administrator 130, and/or the example user interface 132 are hereby expressly defined to include a computer readable medium such as a memory, DVD, CD, Blu-ray disc, etc. storing the software and/or firmware. Further still, the system 100 of FIG. 1 may include one or more elements, processes and/or devices in addition to, or instead of, those illustrated in FIG. 1, and/or may include more than one of any or all of the illustrated elements, processes and devices.

FIG. 2 shows an example hierarchical structure of the nodes 202-232 within the first file system 102 of FIG. 1. The nodes 202-232 are representative of groups of data within a data structure (e.g., a mount point, a file system, etc.). For example, the nodes 202-232 may represent files stored in a directory, folder, etc. Other examples may include fewer or additional nodes. In yet other examples, the nodes may be arranged in a non-hierarchal manner (e.g., sequentially or non-linked). Each of the nodes 202-232 of the illustrated example includes at least one file of data. In other examples, some of the nodes may not include any files or data.

In the example of FIG. 2, the node 202 is a root node that is visible and/or representative of the first file system 102 when a user is searching for the first file system 102. For example, the node 202 may be the D:\ drive on a computer. The nodes 204-210 are second level nodes and are linked to the root node 202. By being linked to the root node 202, the nodes 204-210 are visible to a user when the root node 202 is selected. The second level nodes may include, for example, nodes named 'Program Files,' 'Documents and Settings,' or 'Drivers.' Further, the second level node 204 includes and/or is linked to the third level nodes 212 and 214, the node 206 is linked to the third level node 216, the node 208 is linked to the third level node 218, and node 210 is linked to the third level nodes 228 and 230. Additionally, the third level node 218 is linked to the fourth level nodes 220-224 and the node 222 is linked to the fifth level node 226. Also, the fourth level node 230 is linked to the fifth level node 232.

The node relationship identifier 122 of the illustrated example determines from the first file system 102 the relationship between the nodes 202-232 and the links between the nodes 202-232 shown in FIG. 2. The ratio calculator 124 calculates pack ratios for the nodes 202-232. In some examples, the ratio calculator 124 first calculates the pack ratio for the root node 202. The ratio calculator 124 then calculates pack ratios for the second level nodes 204-210 and the subsequent level nodes 212-232. Additionally, the ratio calculator 124 calculates summed ratios for high level nodes. For example, the summed ratio for the node 204 includes the pack ratio of the nodes 204, 212, and 214. The summed ratio for the node 208 includes the pack ratios of the nodes 208 and 218. Alternatively, the summed ratio for the node 208 may include the pack ratios of the nodes 208, 218, 220, 222, and 224, wherein the summed ratio of the node 218 used in the calculation is the sum of the pack ratios of the nodes 218, 220, 222, and 224.

By using summed ratios for higher level nodes, the traversal path assigner 126 determines which nodes may be included with higher level nodes when the nodes are assigned to sub-traversal paths. By including some nodes with higher level linked nodes, the traversal path assigner 126 assigns nodes more quickly. Additionally, including some nodes with higher level linked nodes decreases transfer time by reducing a number of nodes that are separately transmitted.

FIG. 3 shows the example nodes 202-232 of FIG. 2 assigned to sub-traversal paths 114a-d to transmit data to the second file system 104 of FIG. 1. For brevity and clarity, the communication gateway 112, the sub-traversal paths 114e-h, and the file systems 102 and 104 are not shown in the example of FIG. 3. In the illustrated example, the nodes assigned to sub-traversal paths 114a-d may, likewise, be assigned to nodes 114e-h, respectively. Alternatively, any other relationship between sub-traversal paths 114a-d and 114e-h may be used. Nodes that are not explicitly shown within FIG. 3 are included within a higher level node. For example, the fifth level node 226 and the fourth level node 222 are included within the third level node 218 in the example of FIG. 3. Further, the nodes 202-232 are arranged along the sub-traversal paths 114a-d so that linked nodes are not necessarily transmitted along the same path. For example, the node 204 (including the node 214) is transmitted along the sub-traversal path 114a while the linked lower level node 212 is transmitted along the sub-traversal path 114b.

In the example of FIG. 3, the assignments of the nodes 202-232 to the sub-traversal paths 114a-d have been made so that the sum of the pack ratios of the nodes for each sub-traversal path 114a-d are within an acceptable standard deviation. For example, a threshold standard deviation may be 0.10. In the illustrated example, the pack ratio of the node 202 is 10 files to 40 kilobytes (kB) (e.g., 0.25 with file sizes normalized to kB). The pack ratio of the node 204 is 0.30 and the pack ratio of the node 230 is 0.50. The sum of the pack rations of the nodes 202, 204, and 230 of path 114a is 0.95. Further, the sum of the pack ratios for the nodes 206, 218, and 212 for the path 114b is 0.90, the sum of the ratios of the nodes 208, 220, and 224 for the path 114c is 0.99, and the sum of the ratios of the nodes 210, 228, and 232 for the path 114d is 0.96. Thus, the standard deviation for the sub-traversal paths is 0.0014. In this example, the threshold standard deviation among the sub-traversal paths 114a-d is 0.10. In this instance, the standard deviation (e.g., 0.0014) of the summed pack ratios of the sub-traversal paths 114a-d is below the threshold (e.g., 0.10). Therefore, the nodes 202-232 and associated data are transmitted to the second transfer application 108. However, were the standard deviation greater than the threshold, the transfer processor 120 would create more sub-traversal paths and/or re-assign the nodes 202-232 among the sub-traversal paths.

By having relatively equal pack ratios between the sub-traversal paths 114a-d, the first transfer application 106 transmits the nodes 202-232 and the corresponding data while utilizing each of the sub-traversal paths 114a-d relatively evenly. In other words, because the ratios are approximately equal, the time each sub-traversal path 114a, 114b, 114c, 114d takes to transfer its nodes is also substantially equal. In other words, the number of read function calls and total file sizes of the paths are substantially equal. As a result of this balance, each of the sub-traversal paths is used more efficiently and the overall transfer process is completed in a shorter amount of time relative to known systems.

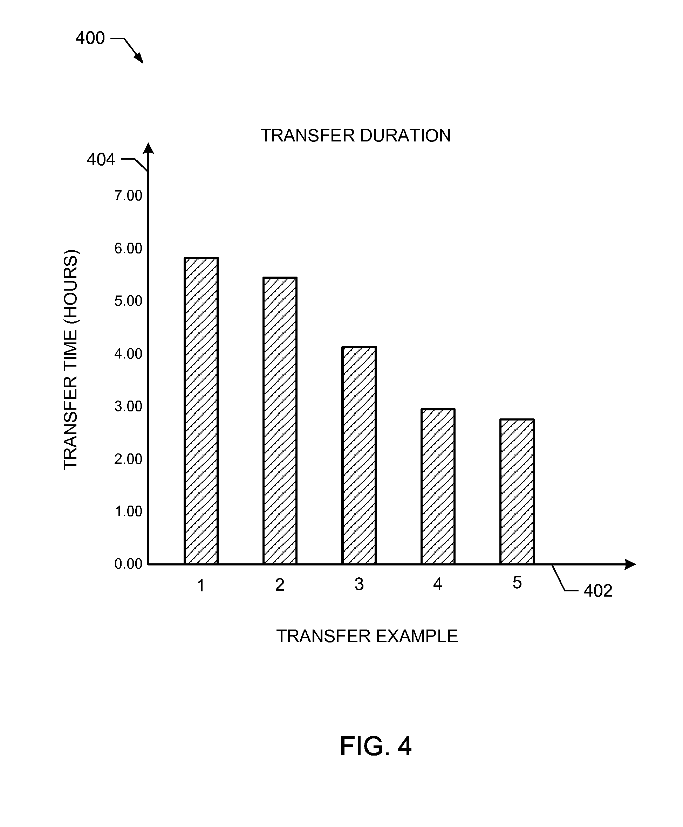

FIG. 4 shows a graph 400 of example transfer times of a file system (e.g., the first file system 102) for different numbers of sub-traversal paths. The graph 400 shows example transfer times on a New Technology File System (NTFS) with a 700 gigabyte (GB) Enterprise Virtual Array (EVA) Logical Unit Number (LUN). This system is operated by a Microsoft® Windows 2003 Server x64. In the example, 624 GB of data is stored in five million files. The file system includes six nodes per level for each higher level node, where the nodes represent file system directories. Also in this example, the sub-traversal paths are limited to nodes partitioned at the first two levels.

In the example graph 400 of FIG. 4, the x-axis 402 includes a label identifying the various transfer scenarios and the y-axis 404 includes a transfer time in hours for each transfer scenario. The transfer scenario 1 corresponds to a single traversal from a root level node (i.e., one sub-traversal path). In other words, the transfer scenario 1 shows the transfer time of sequentially sending all of the data over a single traversal path. The transfer scenario 2 shows a single traversal at the root level with asynchronous I/O within the transfer application (i.e., one sub-traversal path). The transfer scenario 3 shows the transfer time of the data over three sub-traversal paths. In this example, the number of sub-traversal paths is limited to three and the transfer processor 120 has assigned the nodes within the file system to reduce the standard deviation pursuant to the example disclosed above.

The transfer scenario 4 shows the transfer time with six sub-traversal paths. The transfer scenario 5 shows the transfer time with twelve sub-traversal paths. In scenarios 4 and 5, the transfer processor 120 assigns the nodes within the file system to reduce the standard deviation pursuant to the example disclosed above. The graph 400 indicates that the largest improvement in transfer time occurs with six traversal paths in the transfer scenario 4, which takes about three hours compared to the approximately six hour transfer time using a sequential transfer in the transfer scenario 1. The example graph 400 shows that as the sub-traversal paths are increased from 6 in transfer scenario 4 to 12 in transfer scenario 5, the transfer time improvement is proportionally less than the transfer time improvement between transfer scenario 4 and transfer scenario 3.

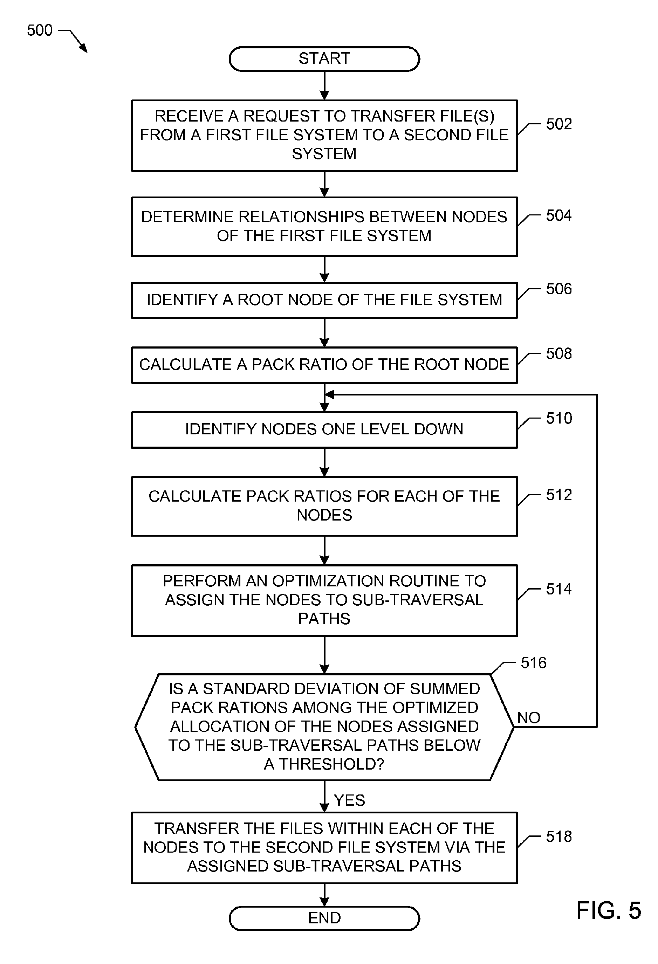

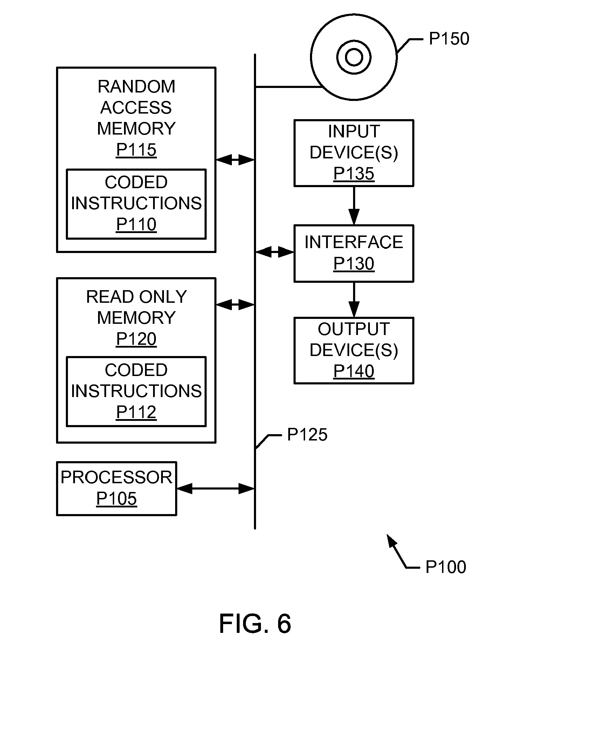

A flowchart representative of example machine readable instructions for implementing the transfer processor 120 of FIG. 1 is shown in FIG. 5. In this example, the machine readable instructions comprise a program for execution by a processor such as the processor P105 shown in the example processor platform P100 discussed below in connection with FIG. 6. The program may be embodied in software stored on a computer readable medium such as a CD, a floppy disk, a hard drive, a DVD, Blu-ray disc, or a memory associated with the processor P105, but the entire program and/or parts thereof could alternatively be executed by a device other than the processor P105 and/or embodied in firmware or dedicated hardware. Further, although the example program is described with reference to the flowchart illustrated in FIG. 5, many other methods of implementing the example transfer processor 120 may alternatively be used. For example, the order of execution of the blocks may be changed, and/or some of the blocks described may be changed, eliminated, or combined.

As mentioned above, the example processes of FIG. 5 may be implemented using coded instructions (e.g., computer readable instructions) stored on a tangible computer readable medium such as a hard disk drive, a flash memory, a ROM, a CD, a DVD, a Blu-ray disc, a cache, a RAM and/or any other storage media in which information is stored for any duration (e.g., for extended time periods, permanently, brief instances, for temporarily buffering, and/or for caching of the information). As used herein, the term tangible computer readable medium is expressly defined to include any type of computer readable storage and to exclude propagating signals. Additionally or alternatively, the example processes of FIG. 5 may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals.

The example machine-readable instructions 500 of FIG. 5 begin by receiving (e.g., via the transfer processor 120 of FIG. 1) a request to transfer data from the first file system 102 to the second file system 104 (block 502). For example, the transfer processor 120 may receive an instruction to transfer a set of files. The example machine-readable instructions 500 then determine relationships between nodes of the first file system 102 (e.g., via the node relationship identifier 122) (block 504). Determining the relationships includes determining which nodes are linked to other nodes. The example machine-readable instructions 500 identify a root node (e.g., a highest level node) of the first file system 102 (e.g., via the node relationship identifier 122) (block 506).

The example machine-readable instructions 500 then calculate a pack ratio of the root node (block 508) and identify linked nodes one level below the root node (e.g., via the ratio calculator 124) (block 510). Then, the example machine-readable instructions 500 calculate pack ratios for the nodes at the next level (e.g., via the ratio calculator 124) (block 512). The example machine-readable instructions 500 then perform an assignment routine to assign the nodes (including nodes included within the next level down) to sub-traversal paths (e.g., via the traversal path assigner 126) (block 514). The example machine-readable instructions 500 determine if a standard deviation of summed ratios among the assigned nodes on the sub-traversal paths is below a threshold (e.g., via the traversal path assigner 126) (block 516).

If the standard deviation is greater than the threshold, the example machine-readable instructions 500 identify nodes at the next level down (e.g., via the node relationship identifier 122) (block 510) and calculate pack ratios for those nodes (e.g., via the ratio calculator 124) (block 512). In other words, if the standard deviation is greater than the threshold, the example machine-readable instructions 500 partition the allocation of nodes among the sub-traversal paths using lower level nodes to achieve a more uniform ratio between the paths. However, if the standard deviation is less than the threshold (block 516), the example machine-readable instructions 500 transfer the data within each of the nodes to the second file system 104 via the assigned sub-traversal paths 114a-d (e.g., via the transfer application manager 128) (block 518). The example machine-readable instructions 500 also transmit the relationship between the nodes. The example machine-readable instructions 500 then terminate. In other examples, the machine-readable instructions 500 may transfer data from a newly specified file system (e.g., control may return to block 502 to process the newly specified file system transfer request).

FIG. 6 is a schematic diagram of an example processor platform P100 that may be used and/or programmed to execute the interactions and/or the example machine readable instructions 500 of FIG. 5. One or more general-purpose processors, processor cores, microcontrollers, etc may be used to implement the processor platform P100.

The processor platform P100 of FIG. 6 includes at least one programmable processor P105. The processor P105 may implement, for example, the example transfer processor 120, the example node relationship identifier 122, the example ratio calculator 124, the example traversal path assigner 126, and/or the example transfer application manager 128 of FIG. 1. The processor P105 executes coded instructions P110 and/or P112 present in main memory of the processor P105 (e.g., within a RAM P115 and/or a ROM P120) and/or stored in the tangible computer-readable storage medium P150. The processor P105 may be any type of processing unit, such as a processor core, a processor and/or a microcontroller. The processor P105 may execute, among other things, the example interactions and/or the example machine-accessible instructions 500 of FIG. 5 to transfer files, as described herein. Thus, the coded instructions P110, P112 may include the instructions 500 of FIG. 5.

The processor P105 is in communication with the main memory (including a ROM P120 and/or the RAM P115) via a bus P125. The RAM P115 may be implemented by dynamic random access memory (DRAM), synchronous dynamic random access memory (SDRAM), and/or any other type of RAM device, and ROM may be implemented by flash memory and/or any other desired type of memory device. The tangible computer-readable memory P150 may be any type of tangible computer-readable medium such as, for example, compact disk (CD), a CD-ROM, a floppy disk, a hard drive, a digital versatile disk (DVD), and/or a memory associated with the processor P105. Access to the memory P115, the memory P120, and/or the tangible computer-medium P150 may be controlled by a memory controller.

The processor platform P100 also includes an interface circuit P130. Any type of interface standard, such as an external memory interface, serial port, general-purpose input/output, etc, may implement the interface circuit P130. One or more input devices P135 and one or more output devices P140 are connected to the interface circuit P130.

Although the above described example methods, apparatus, and articles of manufacture including, among other components, software and/or firmware executed on hardware, it should be noted that these examples are merely illustrative and should not be considered as limiting. For example, it is contemplated that any or all of the hardware, software, and firmware components could be embodied exclusively in hardware, exclusively in software, or in any combination of hardware and software. Accordingly, while the above described example methods, apparatus, and articles of manufacture, the examples provided herein are not the only way to implement such methods, apparatus, and articles of manufacture. For example, while the example methods, apparatus, and articles of manufacturer have been described in conjunction with file systems, mount points, and/or file directories, the example methods, apparatus, and/or article of manufacture may operate within any structure that stores data.

**Claims**

1. A method to transfer files from a first system to a second system, comprising:

    calculating ratios for one or more nodes within the first system, wherein the nodes correspond to one or more files and/or directories of files and wherein the ratios are a ratio of a total number of files at a node to a sum of the file sizes of all the files at the node;
    assigning the nodes to at least two sub-traversal paths;
    calculating sums of the ratios of the nodes assigned to each of the sub-traversal paths;

calculating a standard deviation of the sums;
reassigning the one or more nodes among the at least two sub-traversal paths based on the ratios to minimize standard deviation of the summed ratios of the subtraversal paths; and
transferring the files from each of the nodes to the second system in parallel via the respective sub-traversal paths.

**2.** A method as defined in claim 1, wherein calculating the ratios further comprises calculating a first summed ratio for the first node by summing the first ratio of the first node and a second ratio of a second node linked to the first node; and wherein distributing the nodes comprises distributing the first and the second nodes among the sub-traversal paths to minimize the standard deviation of the sum of the ratios of the first and second nodes.

**3.** An apparatus to transfer nodes from a first system to a second system, comprising:

a ratio calculator to calculate a set of ratios for a set of nodes within the first system, wherein the nodes correspond to one or more files and/or directories of files and wherein a ratio is determined by dividing the total number of files stored at the node by the sum of the file sizes stored at the node;
a travel path assignor to assign the set of nodes among at least two sub- traversal paths, to determine sums of the ratios of the nodes in each of the at least two subtraversal paths, to minimize a standard deviation of the sums of the ratios to a threshold, and to re-assign the set of nodes if the standard deviation exceeds the threshold; and
a transfer application manager to transmit the files stored at the nodes from the first system to a second system in parallel via the at least two sub-traversal paths.

**4.** An apparatus as defined in claim 3, wherein a first node is at a first level and a second node and a third node are at a second level beneath the first level, wherein the second node and the third node are linked to the first node.

**5.** An apparatus as defined in claim 3, wherein:

the ratio calculator is configured to calculate a first summed ratio for the first node by summing a second ratio for the second node, a third ratio for a third node, and a first ratio for the first node; and
the travel path assigner is configured to assign the first, second, and third nodes to the at least two sub-traversal paths to determine a sum of the ratios of the nodes assigned to each of the at least two sub-traversal paths and to minimize the standard deviation of the sum of the ratios.

**6.** A tangible article of manufacture storing machine-readable instructions that, when executed, cause a machine to perform all method steps of the method defined in claims 1 and 2.

## Patentansprüche

**1.** Verfahren zum Übertragen von Dateien von einem ersten System zu einem zweiten System, Folgendes umfassend:

Berechnen von Verhältnissen für einen oder mehrere Knoten innerhalb des ersten Systems, wobei die Knoten einer oder mehreren Dateien und/oder Verzeichnissen von Dateien entsprechen, und wobei die Verhältnisse ein Verhältnis einer Gesamtzahl von Dateien an einem Knoten zu einer Summe der Dateigrößen aller Dateien an dem Knoten sind;
Zuordnen der Knoten zu mindestens zwei Unter-Traversierungspfaden;
Berechnen von Summen der Verhältnisse der Knoten, die jedem der Unter-Traversierungspfade zugeordnet sind;
Berechnen einer Standardabweichung der Summen;
erneutes Zuordnen des einen oder der mehreren Knoten zwischen den mindestens zwei Unter-Traversierungspfaden basierend auf den Verhältnissen, um die Standardabweichung der aufsummierten Verhältnisse der Unter-Traversierungspfade zu minimieren; und
Übertragen der Dateien von jedem der Knoten zu dem parallelen zweiten System über die jeweiligen Unter-Traversierungspfade.

**2.** Verfahren nach Anspruch 1, wobei das Berechnen der Verhältnisse ferner das Berechnen eines ersten aufsummierten Verhältnisses für den ersten Knoten umfasst, indem das erste Verhältnis des ersten Knotens und ein zweites Verhältnis eines mit dem ersten Knoten verknüpften zweiten Knotens aufsummiert wird; und

wobei das Verteilen der Knoten das Verteilen der ersten und zweiten Knoten auf die Unter-Traversierungspfade umfasst, um die Standardabweichung der Summe der Verhältnisse der ersten und zweiten Knoten zu minimieren.

3. Vorrichtung zum Übertragen von Knoten von einem ersten System zu einem zweiten System, Folgendes umfassend:

einen Verhältnisrechner, um einen Satz von Verhältnissen für einen Satz von Knoten innerhalb des ersten Systems zu berechnen, wobei die Knoten einer oder mehreren Dateien und/oder Verzeichnissen von Dateien entsprechen, und wobei ein Verhältnis durch Dividieren der Gesamtzahl von an dem Knoten gespeicherten Dateien durch die Summe der an dem Knoten gespeicherten Dateigrößen bestimmt wird;
einen Traversierungspfadzuordner, um den Satz von Knoten zwischen mindestens zwei Unter-Traversierungspfaden zuzuordnen, um Summen der Verhältnisse der Knoten in jedem der mindestens zwei Unter-Traversierungspfade zu bestimmen, um eine Standardabweichung der Summen der Verhältnisse auf einen Schwellenwert zu minimieren, und um den Satz von Knoten erneut zuzuordnen, wenn die Standardabweichung den Schwellenwert überschreitet; und
einen Übertragungsanwendungsmanager, um die an den Knoten gespeicherten Dateien von dem ersten System zu einem parallelen zweiten System über die mindestens zwei Unter-Traversierungspfade zu übertragen.

4. Vorrichtung nach Anspruch 3, wobei ein erster Knoten auf einer ersten Ebene liegt und ein zweiter Knoten und ein dritter Knoten auf einer zweiter Ebene unter der ersten Ebene liegen, wobei der zweite Knoten und der dritte Knoten mit dem ersten Knoten verknüpft sind.

5. Vorrichtung nach Anspruch 3, wobei:

der Verhältnisrechner dazu ausgebildet ist, ein erstes aufsummiertes Verhältnis für den ersten Knoten zu berechnen, indem ein zweites Verhältnis für den zweiten Knoten, ein drittes Verhältnis für einen dritten Knoten und ein erstes Verhältnis für den ersten Knoten aufsummiert werden; und
der Traversierungspfadzuordner dazu ausgebildet ist, den ersten, zweiten und dritten Knoten den mindestens zwei Unter-Traversierungspfaden zuzuordnen, um eine Summe der Verhältnisse der Knoten zu bestimmen, die jedem der mindestens zwei Unter-Traversierungspfade zugeordnet sind, und um die Standardabweichung der Summe der Verhältnisse zu minimieren.

6. Herstellungsgegenstand, der maschinenlesbare Anweisungen speichert, deren Ausführung bewirkt, dass eine Maschine alle Verfahrensschritte des Verfahrens nach Anspruch 1 und zwei durchführt.

## Revendications

1. Procédé pour le transfert de fichiers d'un premier système vers un deuxième système, comprenant :

- le calcul de ratios pour un ou plusieurs noeuds dans le premier système, les noeuds correspondant à un ou plusieurs fichiers et/ou répertoires de fichiers, et les ratios étant des ratios entre un nombre total de fichiers au niveau d'un noeud et une somme des tailles de fichier de tous les fichiers au niveau du noeud ;
- l'attribution des noeuds à au moins deux sous-parcours traversés ;
- le calcul de sommes de ratios des noeuds attribués à chacun des sous-parcours traversés ;
- le calcul d'un écart type des sommes ;
- la réattribution des un ou plusieurs noeuds entre lesdits deux sous-parcours traversés, sur la base des ratios, pour minimiser l'écart type des ratios additionnés des sous-parcours traversés ; et
- le transfert des fichiers à partir de chacun des noeuds vers le deuxième système, en parallèle par les sous-parcours traversés respectifs.

2. Procédé selon la revendication 1, dans lequel le calcul des ratios comprend en outre le calcul d'un premier ratio additionné pour le premier noeud, en additionnant le premier ratio du premier noeud et un deuxième ratio d'un deuxième noeud lié au premier noeud ; et
dans lequel la répartition des noeuds comprend la répartition des premier et deuxième noeuds entre les sous-parcours traversés pour minimiser l'écart type de la somme des ratios des premier et deuxième noeuds.

3. Dispositif pour le transfert de noeuds d'un premier système vers un deuxième système, comprenant :

une calculatrice de ratios pour calculer une série de ratios de noeuds dans le premier système, les noeuds correspondant à un ou plusieurs fichiers et/ou répertoires de fichiers, et un ratio étant déterminé en divisant le nombre total de fichiers au niveau d'un noeud par la somme des tailles de fichiers stockées au niveau du noeud ; un moyen d'attribution de chemin destiné à attribuer la série de noeuds entre au moins deux sous-parcours traversés, à déterminer les sommes des ratios des noeuds dans chacun des au moins deux sous-parcours traversés, à minimiser un écart type des sommes des ratios à un seuil, et à réattribuer la série de noeuds si l'écart type dépasse le seuil ; et

un gestionnaire d'application de transfert destiné à transmettre les fichiers stockés au niveau des noeuds, d'un premier système à un deuxième système, en parallèle par le biais des au moins deux sous-parcours traversés.

4. Dispositif selon la revendication 3, dans lequel un premier noeud se trouve à un premier niveau et un deuxième noeud et un troisième noeud se trouvent à un deuxième niveau en dessous du premier niveau, le deuxième noeud et le troisième noeud étant liés au premier noeud.

5. Dispositif selon la revendication 3, dans lequel :

la calculatrice de ratio est configurée pour calculer un premier ratio additionné pour le premier noeud en additionnant un deuxième ratio pour le deuxième noeud, un troisième ratio pour un troisième noeud, et un premier ratio pour le premier noeud ; et

le moyen d'attribution de chemin est configuré pour attribuer les premier, deuxième et troisième ratios aux au moins deux sous-parcours traversés, pour déterminer une somme des ratios des noeuds attribués aux au moins deux sous-parcours traversés et pour minimiser l'écart type de la somme de ratios.

6. Article manufacturé tangible stockant des instructions lisibles par machine, amenant, lors de son exécution, une machine à exécuter toutes les étapes de procédé du procédé selon les revendications 1 et 2.

100 ─

| SECOND FILE SYSTEM 104 |
| TRANSFER APPLICATION 108 |

110b

114e
114f
114g
114h

| FIRST FILE SYSTEM 102 |
| TRANSFER APPLICATION 106 |

114a
114b
114c
114d
110a

| COMMUNICATION GATEWAY 112 |

120 ─

| TRANSFER PROCESSOR | |
| TRAVERSAL PATH ASSIGNER 126 | TRANSFER APPLICATION MANAGER 128 |
| RATIO CALCULATOR 124 | NODE RELATIONSHIP IDENTIFIER 122 |

| USER INTERFACE 132 |

| SYS ADMIN 130 |

FIG. 1

FIG. 2

FIG. 3

EP 2 609 512 B1

FIG. 4

15

500

START

RECEIVE A REQUEST TO TRANSFER FILE(S) FROM A FIRST FILE SYSTEM TO A SECOND FILE SYSTEM — 502

DETERMINE RELATIONSHIPS BETWEEN NODES OF THE FIRST FILE SYSTEM — 504

IDENTIFY A ROOT NODE OF THE FILE SYSTEM — 506

CALCULATE A PACK RATIO OF THE ROOT NODE — 508

IDENTIFY NODES ONE LEVEL DOWN — 510

CALCULATE PACK RATIOS FOR EACH OF THE NODES — 512

PERFORM AN OPTIMIZATION ROUTINE TO ASSIGN THE NODES TO SUB-TRAVERSAL PATHS — 514

IS A STANDARD DEVIATION OF SUMMED PACK RATIONS AMONG THE OPTIMIZED ALLOCATION OF THE NODES ASSIGNED TO THE SUB-TRAVERSAL PATHS BELOW A THRESHOLD? — 516

NO

YES

TRANSFER THE FILES WITHIN EACH OF THE NODES TO THE SECOND FILE SYSTEM VIA THE ASSIGNED SUB-TRAVERSAL PATHS — 518

END

FIG. 5

FIG. 6